(19) Europäisches Patentamt
European Patent Office
Office européen des brevets

(11) **EP 2 610 044 B1**

## (12) EUROPEAN PATENT SPECIFICATION

(45) Date of publication and mention
of the grant of the patent:
**13.06.2018 Bulletin 2018/24**

(51) Int Cl.:
*B29C 45/76* (2006.01)          *H02M 3/00* (2006.01)
*H02J 7/34* (2006.01)

(21) Application number: **12198450.4**

(22) Date of filing: **20.12.2012**

(54) **Injection molding apparatus**

Spritzgießvorrichtung

Appareil de moulage par injection

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2011 JP 2011288995**

(43) Date of publication of application:
**03.07.2013 Bulletin 2013/27**

(73) Proprietor: **SUMITOMO HEAVY INDUSTRIES, LTD.
Tokyo 141-6025 (JP)**

(72) Inventor: **Okada, Noritaka
Kanagawa 237-8555 (JP)**

(74) Representative: **Hoffmann Eitle
Patent- und Rechtsanwälte PartmbB
Arabellastraße 30
81925 München (DE)**

(56) References cited:
**EP-A1- 1 304 209     EP-A2- 2 104 217
EP-A2- 2 106 015     US-B1- 6 333 611**

**Description**

BACKGROUND OF THE INVENTION

1. Field of the Invention

An aspect of this disclosure relates to an injection molding apparatus.

2. Description of the Related Art Japanese Laid-Open Patent Publications No. 2000-141440 and No. 2001-232672, for example, disclose an injection molding apparatus configured to save energy by storing regenerative energy generated by a motor via a charge-and-discharge circuit into an electric storage.

However, depending on the type of motor, most of regenerative energy generated by the motor may be lost during an operation for transferring the regenerative energy.

US 6,333,611 B1 discloses a motor drive apparatus provided in an injection molding machine in order to supply electrical energy to a motor. The motor drive apparatus includes an electricity accumulation unit for accumulating electrical energy, an electricity accumulation circuit for accumulating in the electricity accumulation unit electrical energy regenerated from the motor during deceleration period of the motor and for supplying the electrical energy accumulated in the electricity accumulation unit to the motor during an acceleration period of the motor. By virtue of said motor drive apparatus, the electricity accumulation circuit and the electrical energy accumulated in the accumulation unit to electrical energy that is supplied from the power source to the motor, when a heavy member such as a screw of an injection apparatus or a movable plat of a mold clamping apparatus is moved at high speed during a molding cycle, at the beginning of a movement or during an acceleration period of the motor, and electrical energy regenerated from the motor is accumulated in said accumulation unit, during a deceleration period of the motor.

SUMMARY OF THE INVENTION

The invention is defined by the combination of features of claim 1 and of claim 8, respectively. Preferred embodiments are addressed by the dependent claims. Moreover, according to a preferred embodiment, the injection molding apparatus includes plural motors including a mold-opening/closing motor; a driving unit configured to drive the motors; a feeding path; a feeding unit configured to supply power via the feeding path to the driving unit; an electric storage; a detecting unit configured to detect a driving state of the mold-opening/closing motor; and a power transfer unit configured to control power transferred from the feeding path to the electric storage based on the detected driving state of the mold-opening/closing motor.

BRIEF DESCRIPTION OF THE DRAWINGS

FIG. 1 is a drawing illustrating an exemplary configuration of an electric injection molding apparatus according to an embodiment;
FIG. 2 is a drawing illustrating an exemplary configuration of a power transfer unit of an injection molding apparatus;
FIG. 3 is a drawing illustrating a control system including a power transfer unit;
FIG. 4 is a graph illustrating an exemplary waveform of power $P_L$ while a mold opening/closing motor is in operation during a mold-opening step;
FIG. 5 is a graph illustrating an exemplary of power $P_L$ while an injection motor is in operation during an injection step;
FIG. 6 is a graph illustrating a response waveform of power $P_M$ to power $P_L$ during a mold-opening step; and
FIG. 7 is a graph illustrating a response waveform of power $P_M$ to power $P_L$ during an injection step.

DESCRIPTION OF EMBODIMENTS

Embodiments of the present invention are described below with reference to the accompanying drawings.

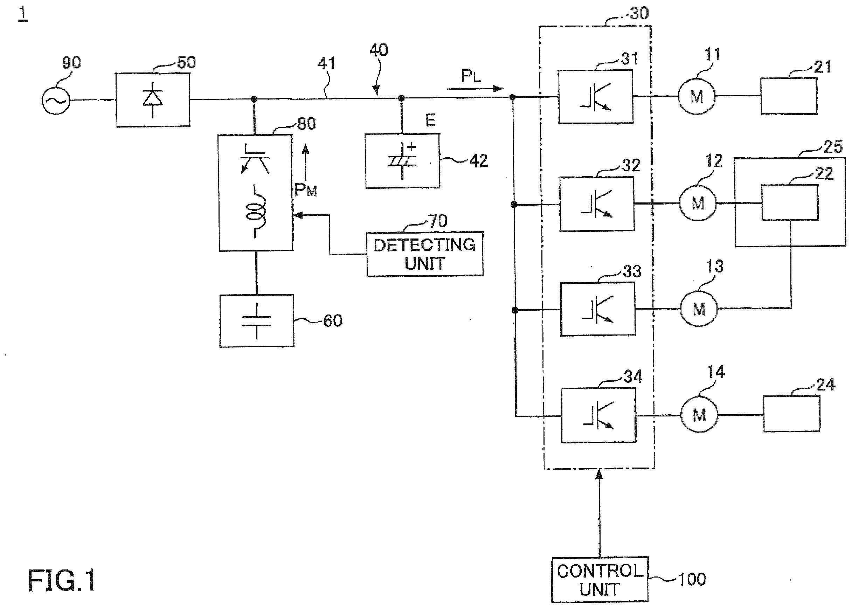

FIG. 1 is a drawing illustrating an exemplary configuration of an electric injection molding apparatus 1 according to an embodiment.
The injection molding apparatus 1 includes plural motors (in the example of FIG. 1, motors 11 through 14 are provided, but the number of motors is not limited to four), a driving unit 30 for driving the motors 11 through 14, a feeding unit 50 for supplying power via a feeding path 40 to the driving unit 30, an electric storage 60, and a power transfer unit 80 for transferring power from the feeding path 40 to the electric storage 60. The injection molding apparatus 1 includes a function to transfer regenerative energy generated by at least one of the motors 11 through 14 via the driving unit 30, the feeding path 40, and the power transfer unit 80, and store the regenerative energy in the electric storage 60. The injection molding apparatus 1 also includes a function to transfer energy released from the electric storage 60 via the power transfer unit 80, the feeding path 40, and the driving unit 30, and supply the energy to at least one of the motors 11 through 14. These functions make it possible to save energy consumed by the injection molding apparatus 1.

The motor 11 is a mold-opening/closing motor (servomotor), the motor 12 is an injection motor (servomotor), the motor 13 is a metering motor (servomotor), and the motor 14 is an ejector motor (servomotor). The mold-opening/closing motor 11 generates regenerative energy during its deceleration period. The injection motor 12 and the ejector motor 14 also generate regenerative energy during their deceleration periods.

Here, the deceleration period of the injection motor 12 is shorter than the deceleration period of the mold-opening/closing motor 11. For this reason, when power regeneration is performed by the injection motor 12, energy represented by a time integral value becomes small, and power represented by an instantaneous value becomes large. Accordingly, most of regenerative energy generated by the injection motor 12 may be lost when the regenerative energy is transferred by the power transfer unit 80 to the electric storage 60. As a result, the energy saving effect provided by using energy stored in the electric storage 60 may be reduced.

The deceleration period of the ejector motor 14 is longer than the deceleration period of the injection motor 12 but is still shorter than the deceleration period of the mold-opening/closing motor 11. Therefore, also when power regeneration is performed by the ejector motor 14, the energy saving effect provided by using energy stored in the electric storage 60 may be small.

Meanwhile, when power regeneration is performed by the mold-opening/closing motor 11 whose deceleration period is sufficiently longer than the deceleration periods of the injection motor 12 and the ejector motor 14, the amount of regenerative energy that is lost when the regenerative energy is transferred by the power transfer unit 80 to the electric storage 60 is negligible compared to the total amount of the regenerative energy generated by the mold-opening/closing motor 11.

The injection molding apparatus 1 of the present embodiment includes a detecting unit 70 for detecting driving states (or modes) of the mold-opening/closing motor 11. When a regenerating state (or mode) of the mold-opening/closing motor 11 is detected by the detecting unit 70, the power transfer unit 80 controls power transferred from the feeding path 40 to the electric storage 60 based on the detection result. This configuration makes it possible to detect the regenerating state of the mold-opening/closing motor 11 among regenerating states of the motors 11 through 14 and use the detection result to control power transfer from the feeding path 40 to the electric storage 60. This in turn makes it possible to reduce the loss of energy that occurs when regenerative energy generated by a motor is transferred from the feeding path 40 to the electric storage 60.

According to an embodiment, the power transfer unit 80 of the injection molding apparatus 1 may be configured to limit transfer of power from the feeding path 40 to the electric storage 60 when regenerative energy generated by the injection motor 12 and the ejector motor 14 is transferred via the driving unit 30 to the feeding path 40 compared to a case where regenerative energy generated by the mold-opening/closing motor 11 is transferred via the driving unit 30 to the feeding path 40. Here, "limiting" transfer of power may include "stopping" transfer of power. This configuration makes it possible to reduce or eliminate the possibility that regenerative energy generated by the injection motor 12 and the ejector motor 14 is transferred to the electric storage 60. This in turn makes it possible to reduce the loss of energy that occurs when regenerative energy generated by a motor is transferred from the feeding path 40 to the electric storage 60.

Similarly to the deceleration period when regenerative energy is generated, the power running period of the injection motor 12 is shorter than the power running period of the mold-opening/closing motor 11. Here, the power running period indicates a time period during which power is supplied from the feeding path 40 via the driving unit 30 to a motor, and includes a time period during which the motor accelerates and a time period during which the speed of the motor is controlled at a constant value. For this reason, when power is supplied from the electric storage 60 via the feeding path 40 to the injection motor 12, most of energy released from the electric storage 60 may be lost when the energy is transferred by the power transfer unit 80 to the feeding path 40. As a result, the energy saving effect provided by using energy stored in the electric storage 60 may be reduced.

The power running period of the ejector motor 14 is longer than the power running period of the injection motor 12 but is still shorter than the power running period of the mold-opening/closing motor 11. Therefore, also when power is supplied from the electric storage 60 via the feeding path 40 to the ejector motor 14, the energy saving effect provided by using energy stored in the electric storage 60 may be small.

Meanwhile, when power is supplied from the electric storage 60 via the feeding path 40 to the mold-opening/closing motor 11 whose power running period is sufficiently longer than the power running-periods of the injection motor 12 and the ejector motor 14, the amount of energy that is lost when the energy is transferred by the power transfer unit 80 to the feeding path 40 is negligible compared to the total amount of the energy released from the electric storage 60.

For the above reasons, when a power running state of the mold-opening/closing motor 11 is detected by the detecting unit 70, the power transfer unit 80 is preferably configured to control power transferred from the electric storage 60 to the feeding path 40 based on the detection result. This configuration makes it possible to detect the power running state of the mold-opening/closing motor 11 among power running states of the motors 11 through 14 and use the detection result to control power transfer from the electric storage 60 to the feeding path 40. This in turn makes it possible to reduce the loss of energy that occurs when power is transferred from the electric storage 60 to the feeding path 40 to supply power to a motor.

The power transfer unit 80 may also be configured to limit transfer of power from the electric storage 60 to the feeding path 40 when the injection motor 12 and the ejector motor 14 are in the power running state compared to a case where the mold-opening/closing motor 11 is in the power running state. Here, "limiting" transfer of power may include "stopping" transfer of power. This configuration makes it possible to reduce the loss of energy that occurs when power is transferred from the electric storage 60 to the feeding path 40 to supply power to a motor.

The configuration of the injection molding apparatus 1 is described in more detail below.

The mold-opening/closing motor 11 causes a mold-opening/closing shaft 21 to move to close a mold (mold-closing step), to open the mold (mold-opening step), or to clamp the mold (mold-clamping step).

The injection motor 12 causes a screw 22 in a heating cylinder 25 to move forward. When the screw 22 is moved forward, a molten material in front of the screw 22 in the heating cylinder 25 is injected into a mold cavity (injection step).

The metering motor 13 causes the screw 22 to rotate, and the rotation of the screw 22 causes the molten material to be stored in the front part of the heating cylinder 25 (metering step).

The ejector motor 14 causes an ejector shaft 24 to move to eject a molded product from the mold (ejection step).

The driving unit 30 drives the motors 11 through 14 and includes motor driving circuits 31 through 34 corresponding to the motors 11 through 14. The motor driving circuits 31 through 34 drive the corresponding motors 11 through 14. The motor driving circuits 31 through 34 are connected to the feeding path 40 and are thereby connected in parallel to the feeding unit 50. Each of the motor driving circuits 31 through 34 is, for example, an inverter that converts the output (direct-current power) from the feeding unit 50 into a three-phase alternating current, and may include a three-phase bridge circuit composed of six power transistors.

The feeding path 40 is a direct-current power supply path (may also be referred to as a "DC link") provided between the direct-current output side of the feeding unit 50 and the direct-current input sides of the motor driving circuits 31 through 34 of the driving unit 30. The feeding path 40 includes a direct-current power supply line 41 and a smoothing capacitor 42. The direct-current power supply line 41 transfers the direct current between the feeding unit 50, the driving unit 30, the smoothing capacitor 42, and the power transfer unit 80. The smoothing capacitor 42 smoothes the direct current flowing through the direct-current power supply line 41. For example, the smoothing capacitor 42 may be implemented by an electrolytic capacitor.

The feeding unit 50 supplies the direct-current power via the feeding path 40 to the driving unit 30. The input side of the feeding unit 50 is connected to a power supply 90. The power supply 90 may be, for example, an alternating-current power supply of a plant and provided outside of the injection molding apparatus 1. The power supply 90 outputs, for example, a sine wave alternating current power with a predetermined voltage (e.g., 200 V or 400 V) at a constant frequency (e.g., 50 Hz or 60 Hz). The feeding unit 50 is connected via the feeding path 40 and the driving unit 30 to the motors 11 through 14. The feeding unit 50 converts power supplied from the power supply 90 and supplies the converted power via the feeding path 40 and the driving unit 30 to the motors 11 through 14. The feeding unit 50 may be, for example, an AC/DC converter including a rectifier implemented by a three-phase diode bridge including six diodes.

The electric storage 60 has a charge capacity that is sufficiently greater than the charge capacity of the smoothing capacitor 42. For example, the electric storage 60 may be implemented by a battery or an electric double layer capacitor. Using an electric double layer capacitor makes it possible to keep the size of the electric storage 60 small while providing a sufficient capacity to store regenerative power.

The detecting unit 70 detects states of the mold-opening/closing motor 11. The detecting unit 70 may be provided in the power transfer unit 80 or in a control unit 100 for controlling the driving unit 30.

The detecting unit 70 distinguishes states of the mold-opening/closing motor 11 from states of the other motors 12 through 14 based on power variation patterns at the feeding path 40 that vary depending on the operating states of the motors 11 through 14. For example, the detecting unit 70 detects a power variation pattern that appears when the mold-opening/closing motor 11 is in the regenerating state and thereby detects the regenerating state of the mold-opening/closing motor 11. Similarly, the detecting unit 70 detects a power variation pattern that appears when the injection motor 12 is in the regenerating state and thereby detects the regenerating state of the injection motor 12. Also, the detecting unit 70 detects a power variation pattern that appears when the mold-opening/closing motor 11 is in the power running state and thereby detects the power running state of the mold-opening/closing motor 11. Similarly, the detecting unit 70 detects a power variation pattern that appears when the injection motor 12 is in the power running state and thereby detects the power running state of the injection motor 12. The detecting unit 70 also detects the regenerating state and the power running state of the ejector motor 14 in a similar manner.

More specifically, for example, the detecting unit 70 may be configured to detect power variation patterns at the feeding path 40 by monitoring voltage variations at the smoothing capacitor 42. For example, the detecting unit 70 determines that regenerative energy generated by a motor is being supplied to the feeding path 40 (i.e., a regenerating state) when the voltage at the smoothing capacitor 42 increases, and determines that power is being supplied from the feeding path 40 to a motor (i.e., a power running state) when the voltage at the smoothing capacitor 42 decreases. The detecting unit 70 may be configured to determine the correspondence between motors and detected states based on differences in voltage variation patterns at the smoothing capacitor 42.

Alternatively, the detecting unit 70 may be configured to detect power variation patterns at the feeding path 40 by monitoring current variations at the direct-current power supply line 41. For example, the detecting unit 70 determines whether a motor is in the regenerating state or the power running state based on the direction of a current flowing through the direct-current power supply line 41. When the direction of the current flowing through the direct-current power supply line 41 is from the driving unit 30 to the feeding unit 50, the detecting unit 70 determines that the motor is in the regenerating state. Meanwhile, when the direction of the current flowing through the direct-current power supply line 41 is from the feeding unit 50 to the driving unit 30, the detecting unit 70 determines that the motor is in the power running state. The detecting unit 70 may be configured to determine the correspondence between motors and detected states based on differences in current variation patterns of the current flowing through the direct-current power supply line 41.

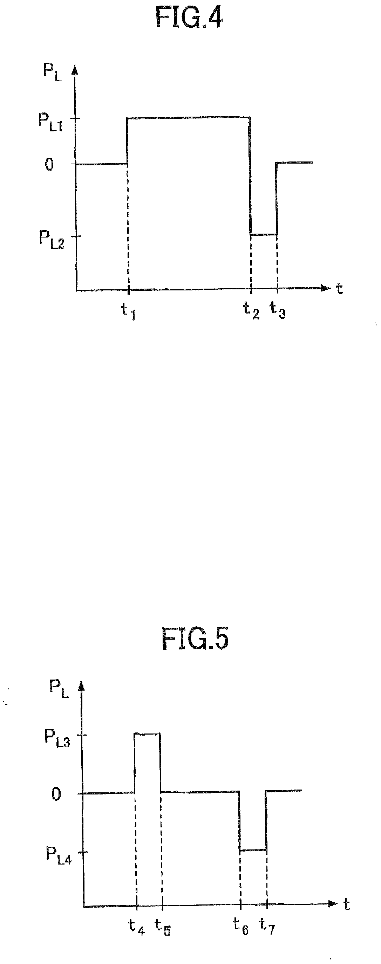

Preferably, the detecting unit 70 may be configured to detect states of the mold-opening/closing motor 11 based on periods of power variations (power variation periods) caused by voltage or current variations at the feeding path 40. More specifically, the detecting unit 70 may be configured to detect power variation patterns at the feeding path 40 by monitoring power variation periods, and detect states of the mold-opening/closing motor 11 based on the power variation patterns. This configuration makes it possible to accurately distinguish the regenerating state and the power running state of the mold-opening/closing motor 11 from those of the motors 12 through 14. Examples of power variation periods include an acceleration period (t1-t2) and a deceleration period (t2-t3) during the mold-opening step as illustrated in FIG. 4, and an acceleration period (t4-t5) and a deceleration period (t6-t7) during the injection step as illustrated in FIG. 5. FIGs. 4 and 5 are described in more detail later. The detecting unit 70 can accurately distinguish the regenerating state and the power running state of the mold-opening/closing motor 11 from those of the motors 12 through 14 by measuring power variation periods as described above.

Alternatively, the detecting unit 70 may be configured to receive signals indicating states of the mold-opening/closing motor 11 from the control unit 100 that controls the states of the mold-opening/closing motor 11 via the driving unit 30, and detect the states of the mold-opening/closing motor 11 based on the received signals. Also, the detecting unit 70 may be configured to detect the states of the mold-opening/closing motor 11 by excluding states of the motors 12 through 14 other than the mold-opening/closing motor 11 from detection targets. In other words, the detecting unit 70 may be configured to detect the states of the mold-opening/closing motor 11 by excluding the influence of the motors 12 through 14 other than the mold-opening/closing motor 11 from the power variation patterns.

The control unit 100 may be implemented by a microcomputer that includes a central processing unit (CPU), a read-only memory (ROM) storing control programs, a read/write random access memory (RAM) storing computational results, a timer, a counter, an input interface, and an output interface.

The control unit 100 controls the start and end of respective steps in an injection molding process by sending current (torque) commands corresponding to the steps to the motor driving circuits 31 through 34. According to the commands, the motor driving circuits 31 through 34 drive the corresponding motors 11 through 14 used in the steps. For example, the control unit 100 performs a mold-opening step and a mold-closing step by controlling the rotational speed of the mold-opening/closing motor 11 via the motor driving circuit 31. The control unit 100 also performs an injection step and a pressure keeping step by controlling the rotational speed of the injection motor 12 via the motor driving circuit 32. The control unit 100 also performs a metering step by controlling the rotational speed of the metering motor 13 via the motor driving circuit 33. Further, the control unit 100 performs an ejection step by controlling the rotational speed of the ejector motor 14 via the motor driving circuit 34.

The power transfer unit 80 transfers power between the feeding path 40 and the electric storage 60. The power transfer unit 80 may be configured to charge the electric storage 60 with excess energy at the feeding path 40 and supplement a shortage of energy at the feeding path 40 with a discharge from the electric storage 60. For example, when the regenerating state of the mold-opening/closing motor 11 is detected by the detecting unit 70, the power transfer unit 80 controls power transferred from the feeding path 40 to the electric storage 60 based on the detection result. Also, when the power running state of the mold-opening/closing motor 11 is detected by the detecting unit 70, the power transfer unit 80 controls power transferred from the electric storage 60 to the feeding path 40 based on the detection result.

The power transfer unit 80 may also be configured to charge the electric storage 60 by transferring power, which is supplied from the power supply 90 via the feeding unit 50 to the feeding path 40, to the electric storage 60 during a period from when the power supply 90 starts to supply the supply voltage to the feeding unit 50 (i.e., power is turned on) until when the temperature of the heating cylinder 25 housing the screw 22 rises to a predetermined value. This configuration makes it possible to use the energy stored in the electric storage 60 to initially accelerate the mold-opening/closing motor 11 even before power regeneration is performed by the mold-opening/closing motor 11.

Also, the power transfer unit 80 transfers regenerative energy generated by the mold-opening/closing motor 11 from the feeding path 40 to the electric storage 60 (charging operation) while preventing transfer of power from the electric storage 60 to the feeding path 40 (discharge operation) while the voltage at the electric storage 60 is less than a predetermined value after the power supply 90 starts to supply the supply voltage to the feeding unit 50 (i.e., power is turned on). This configuration makes it possible to efficiently charge the electric storage 60 with regenerative energy generated by the mold-opening/closing motor 11 while the amount of charge in the electric storage 60 is less than a predetermined value. Further, the power transfer unit 80 may be configured to supply power from the electric storage 60 to the feeding path 40 when the mold-opening/closing motor 11 is in the power running state and the voltage at the electric storage 60 is greater than or equal to the predetermined value. This configuration makes it possible to prevent overdischarge of the electric storage 60 when the amount of charge in the electric storage 60 is less than the predetermined value.

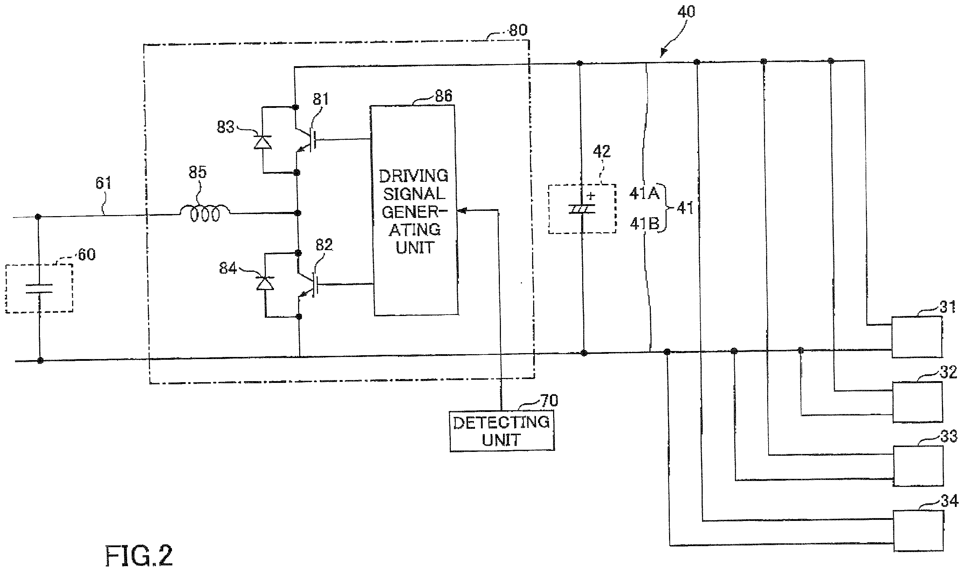

FIG. 2 is a drawing illustrating an exemplary configuration of the power transfer unit 80 of the injection molding apparatus 1. The power transfer unit 80 performs charge and discharge operations between the feeding path 40 and the electric storage 60. The direct-current power supply line 41 of the feeding path 40 includes a high-potential side power supply line 41A and a low-potential side power supply line 41B. The smoothing capacitor 42 is provided between the high-potential side power supply line 41A and the low-potential side power supply line 41B. The electric storage 60 is provided between a high-potential side power supply line 61 and the low-potential side power supply line 41B. In the example of FIG. 2, the low-potential side power supply line 41B is used as a common direct-current power supply line for input and output of the power transfer unit 60. Alternatively, the high-potential side power supply line 41A may be used as a common direct-current power supply line for input and output of the power transfer unit 80.

The power transfer unit 80 may be implemented, for example, as a DC-DC converter including a high-side transistor 81, a low-side transistor 82, an inductor 85 connected to a node between the transistors 81 and 82, a diode 83 connected in parallel to the transistor 81, a diode 84 connected in parallel to the transistor 82, and a driving signal generating unit 86 that generates driving signals for driving the transistors 81 and 82. The driving signal generating unit 86 controls the transistors 81 and 82 based on detection results of the detecting unit 70.

When receiving a detection result indicating the regenerating state of the mold-opening/closing motor 11 from the detecting unit 70, the driving signal generating unit 86 outputs driving signals to turn on/off the transistors 81 and 82 so that power is supplied from the feeding path 40 to the electric storage 60. When receiving a detection result indicating the power running state of the mold-opening/closing motor 11 from the detecting unit 70, the driving signal generating unit 86 outputs driving signals to turn on/off the transistors 81 and 82 so that power is supplied from the electric storage 60 to the feeding path 40.

Next, an exemplary control method performed by the power transfer unit 80 is described. In this control method, the detecting unit 70 detects the states of the mold-opening/closing motor 11 by excluding states of the motors 12 through 14 from detection targets. In other words, this control method is configured to limit transfer of power from the feeding path 40 to the electric storage 60 when power is regenerated by the motors 12 through 14 compared to a case where power is regenerated by the mold-opening/closing motor 11. This configuration makes it possible to lower the responsiveness (sensitivity) of the power transfer unit 80 to power variations at the feeding path 40 related to the motors 12 through 14 compared to the responsiveness (sensitivity) of the power transfer unit 80 to power variations at the feeding path 40 related to the mold-opening/closing motor 11.

In FIG. 1, $P_M$ indicates power output from the power transfer unit 80 to the feeding path 40, $P_L$ indicates total power that the motor driving circuits 31 through 34 receive from the feeding path 40, and E indicates energy stored in the smoothing capacitor 42 of the feeding path 40. This control method is based on a proportional integral (PI) control where $P_L$ is a disturbance, $P_M$ is manipulated, and E is controlled. Also, Er indicates a command value for E. The detecting unit 70 can detect the energy E by detecting the voltage at the smoothing capacitor 42.

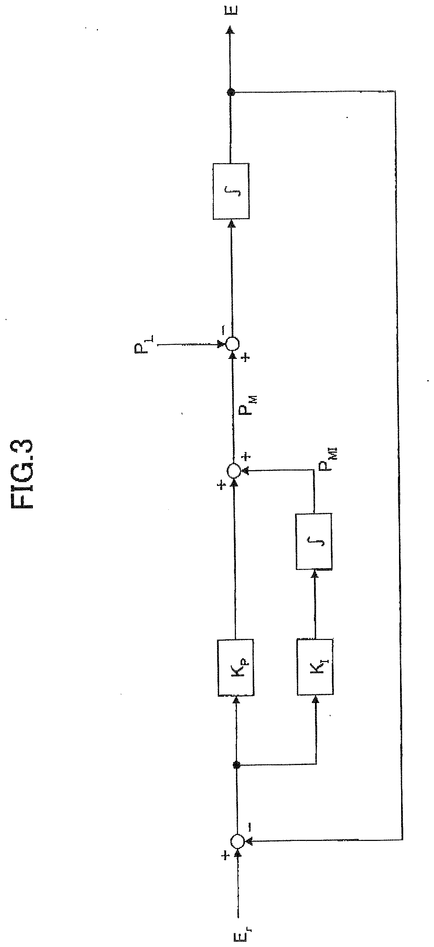

FIG. 3 is a drawing illustrating a control system including the power transfer unit 80. In FIG. 3, $K_P$ and $K_I$ indicate gains.

The control system is expressed by formulas (1) and (2) below.

$$\frac{d}{dt}\begin{bmatrix} P_{MI} \\ E \end{bmatrix} = \begin{bmatrix} 0 & -K_I \\ 1 & -K_P \end{bmatrix}\begin{bmatrix} P_{MI} \\ E \end{bmatrix} + \begin{bmatrix} 0 & K_I \\ -1 & K_P \end{bmatrix}\begin{bmatrix} P_L \\ E_r \end{bmatrix} \qquad \cdots (1)$$

$$P_M = \begin{bmatrix} 1 & -K_P \end{bmatrix}\begin{bmatrix} P_{MI} \\ E \end{bmatrix} + \begin{bmatrix} 0 & K_P \end{bmatrix}\begin{bmatrix} P_L \\ E_r \end{bmatrix} \qquad \cdots (2)$$

By performing Laplace transform on formula (1), formula (3) below is obtained.

$$s\begin{bmatrix} P_{MI} \\ E \end{bmatrix} - \begin{bmatrix} P_{MI}(0) \\ E(0) \end{bmatrix} = \begin{bmatrix} 0 & -K_I \\ 1 & -K_P \end{bmatrix}\begin{bmatrix} P_{MI} \\ E \end{bmatrix} + \begin{bmatrix} 0 & K_I \\ -1 & K_P \end{bmatrix}\begin{bmatrix} P_L \\ E_r \end{bmatrix} \qquad \cdots (3)$$

In formula (3), $P_{MI}(0)$ indicates the initial value of $P_{MI}$ and $E(0)$ indicates the initial value of E.

Formula (4) below is obtained by transforming formula (3).

$$\begin{bmatrix} s & K_I \\ -1 & s+K_P \end{bmatrix}\begin{bmatrix} P_{MI} \\ E \end{bmatrix} = \begin{bmatrix} 0 & K_I \\ -1 & K_P \end{bmatrix}\begin{bmatrix} P_L \\ E_r \end{bmatrix} + \begin{bmatrix} P_{MI}(0) \\ E(0) \end{bmatrix}$$

$$\therefore \begin{bmatrix} P_{MI} \\ E \end{bmatrix} = \frac{1}{s^2+K_P s+K_I}\begin{bmatrix} s+K_P & -K_I \\ 1 & s \end{bmatrix}\left(\begin{bmatrix} 0 & K_I \\ -1 & K_P \end{bmatrix}\begin{bmatrix} P_L \\ E_r \end{bmatrix} + \begin{bmatrix} P_{MI}(0) \\ E(0) \end{bmatrix}\right)$$

$$= \frac{1}{s^2+K_P s+K_I}\left(\begin{bmatrix} K_I & K_I s \\ -s & K_P s+K_I \end{bmatrix}\begin{bmatrix} P_L \\ E_r \end{bmatrix} + \begin{bmatrix} s+K_P & -K_I \\ 1 & s \end{bmatrix}\begin{bmatrix} P_{MI}(0) \\ E(0) \end{bmatrix}\right) \qquad \cdots (4)$$

By substituting formula (4) in formula (2), formula (5) below is obtained.

$$P_M = \frac{1}{s^2+K_P s+K_I}\left(\begin{bmatrix} K_P s+K_I & K_P s^2+K_I s \end{bmatrix}\begin{bmatrix} P_L \\ E_r \end{bmatrix} + \begin{bmatrix} s & -K_P s-K_I \end{bmatrix}\begin{bmatrix} P_{MI}(0) \\ E(0) \end{bmatrix}\right) \qquad \cdots (5)$$

Here, assuming that the command value Er is constant and equals the initial value E (0) and the initial value $P_{MI}$ (0) is 0 as expressed by formula (6) below, formula (7) is obtained based on formula (5).

$$E_r = \frac{E(0)}{s}, \quad P_{MI}(0) = 0 \qquad \cdots (6)$$

$$P_M = \frac{K_P s+K_I}{s^2+K_P s+K_I}P_L \qquad \cdots (7)$$

When the denominator of the right-hand side of formula (7) is factorized, formula (8) below is obtained.

$$s^2+K_P s+K_I = (s+\alpha)(s+\beta) \qquad \cdots (8)$$

Poles $\alpha$ and $\beta$ in formula (8) determine the responsiveness of the control system.

FIG. 4 is a graph illustrating an exemplary waveform of power $P_L$ while the mold opening/closing motor 11 is in operation during the mold-opening step. FIG. 5 is a graph illustrating an exemplary waveform of power $P_L$ while the injection motor 12 is in operation during the injection step. A period in which the value of power $P_L$ is positive corresponds to a power running period in which power is supplied from the feeding path 40 via the driving unit 30 to a motor and the motor is accelerated. Meanwhile, a period in which the value of power $P_L$ is negative corresponds to a regeneration period in which a motor decelerates and power is supplied from the motor via the driving unit 30 to the feeding path 40.

In FIG. 4, for example, t1 is 0 ms, t2 is 1500 ms, and t3 is 2000 ms. In FIG. 5, for example, t4 is 0 ms, t5 is 20 ms, t6 is 100 ms, and t7 is 120 ms. In these examples, the deceleration period (t2-t3) in the mold-opening step of FIG. 4 is 500 ms, and the deceleration period (t6-t7) in the injection step of FIG. 5 is 20 ms.

The response time of the control system can be made shorter than the deceleration period (t2-t3) in the mold-opening step of FIG. 4 and longer than the deceleration period (t6-t7) in the injection step of FIG. 5 by setting the real parts of complex numbers $\alpha$ and $\beta$ at the inverse numbers of values between the deceleration period (t2-t3) and the deceleration period (t6-t7).

For example, when $\alpha$ and $\beta$ are defined as expressed by formula (9) below, formula (10) is obtained from formula (8).

$$\alpha = \frac{1+i}{100}, \quad \beta = \frac{1-i}{100} \qquad \cdots (9)$$

$$K_P = \frac{2}{100}, \quad K_I = \frac{2}{100^2} \qquad \cdots (10)$$

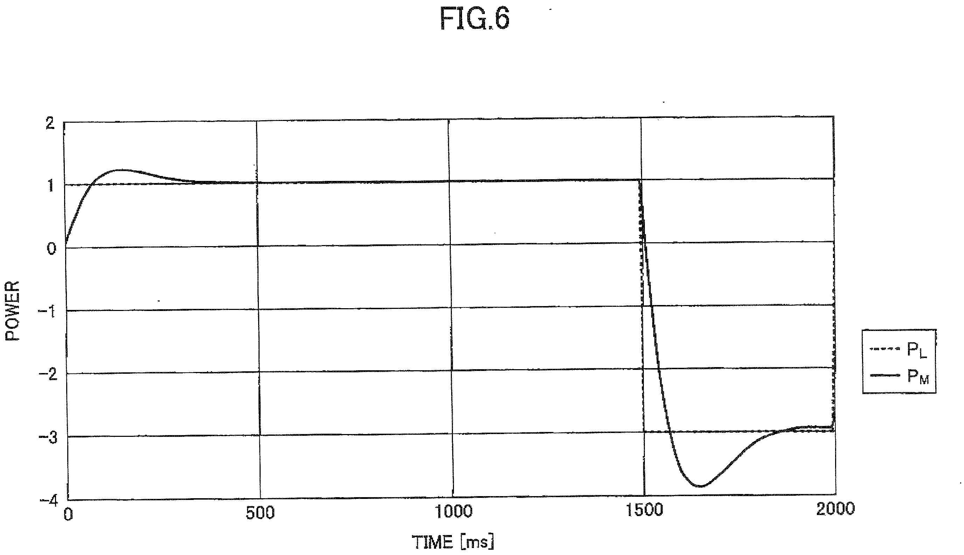

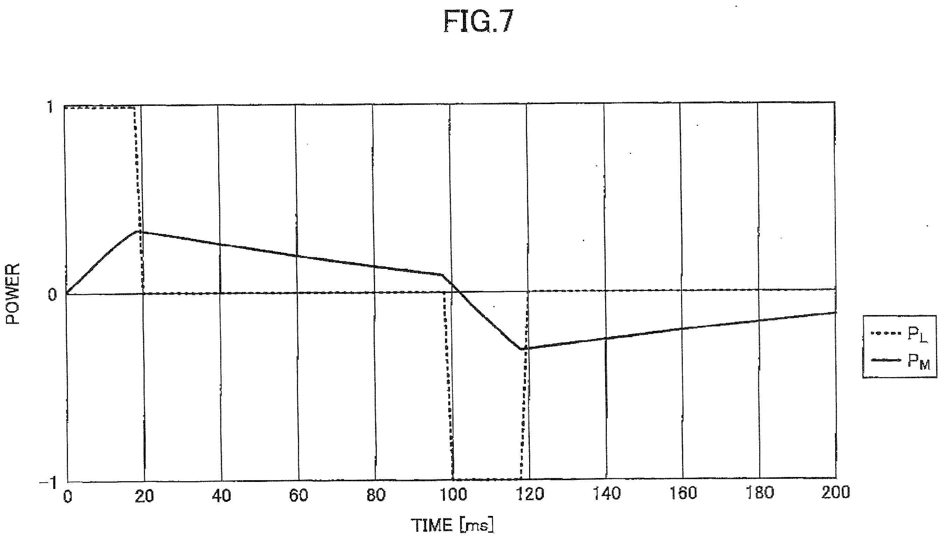

Accordingly, based on formula (7), response waveforms of power $P_M$, which is transferred by the power transfer unit 80 from the electric storage 60 to the feeding path 40, to the total power $P_L$ that the motor driving circuits 31 through 34 receive from the feeding path 40 become as illustrated in FIGs. 6 and 7.

FIG. 6 is a graph illustrating a response waveform of power $P_M$ to power $P_L$ during a mold-opening step. FIG. 7 is a graph illustrating a response waveform of power $P_M$ to power $P_L$ during an injection step. A period in which the value of $P_M$ is positive represents a discharge period in which the power transfer unit 80 transfers power from the electric storage 60 to the feeding path 40. A period in which the value of $P_M$ is negative represents a charge period in which the power transfer unit 80 transfers power from the feeding path 40 to the electric storage 60. During the mold-opening step of FIG. 6, $P_M$ varies in accordance with the variation of $P_L$. Meanwhile, during the injection step of FIG. 7, the variation of $P_M$ is not in accordance with the variation of $P_L$.

This indicates that it is possible to make the amounts of electricity charged and discharged by the power transfer unit 80 while the injection motor 12 is in operation smaller than the amounts of electricity charged and discharged by the power transfer unit 80 while the mold-opening/closing motor 11 is in operation. This in turn makes it possible to reduce the loss of energy that occurs when power is transferred between the feeding path 40 and the electric storage 60.

An injection molding apparatus according to the embodiments of the present invention is described above. However, the present invention is not limited to the specifically disclosed embodiments, and variations and modifications may be made without departing from the scope of the present invention.

For example, the power transfer unit 80 may be configured to charge the electric storage 60 by transferring power from the feeding path 40 to the electric storage 60 during the regeneration period of the mold-opening/closing motor 11, and to discharge the electric storage 60 by transferring power from the electric storage 60 to the feeding path 40 during the power running period of at least one of the motors 11 through 14. Also, the power transfer unit 80 may be configured to transfer power from the electric storage 60 to the feeding path 40 during the power running period of one of the motors 12 through 14.

The types of motors are not limited to those described above. The present invention may be applied to any type of motor used in an injection molding apparatus.

The injection molding apparatus 1 may include a function to feed back regenerative energy generated by at least one of plural motors via the driving unit 30, the feeding path 40, and the feeding unit 50 to the power supply 90. This function makes it possible to reduce energy consumed by the injection molding apparatus 1.

When power regeneration is performed by the mold-opening/closing motor 11 whose deceleration period is sufficiently longer than the deceleration periods of the injection motor 12 and the ejector motor 14, the amount of regenerative energy that is lost when the regenerative energy is transferred by the feeding unit 50 to the power supply 90 is negligible compared to the total amount of regenerative energy generated by the mold-opening/closing motor 11.

For this reason, the injection molding apparatus 1 may be configured such that the detecting unit 70 detects driving states (or modes) of the mold-opening/closing motor 11 and the feeding unit 50 controls power transferred from the feeding path 40 to the power supply 90 when a regenerating state (or mode) of the mold-opening/closing motor 11 is detected by the detecting unit 70. This configuration makes it possible to detect the regenerating state of the mold-opening/closing motor 11 among regenerating states of the motors 11 through 14 and use the detection result to control power transfer from the feeding path 40 to the power supply 90. This in turn makes it possible to reduce the loss of energy that occurs when regenerative energy generated by a motor is transferred from the feeding path 40 to the power supply 90.

According to an embodiment, the feeding unit 50 of the injection molding apparatus 1 may be configured to limit transfer of power from the feeding path 40 to the power supply 90 when regenerative energy generated by the injection motor 12 and the ejector motor 14 is transferred via the driving unit 30 to the feeding path 40 compared to a case where regenerative energy generated by the mold-opening/closing motor 11 is transferred via the driving unit 30 to the feeding path 40. Here, "limiting" transfer of power may include "stopping" transfer of power. This configuration makes it possible to reduce or eliminate the possibility that regenerative energy generated by the injection motor 12 and the ejector motor 14 is transferred to the power supply 90. This in turn makes it possible to reduce the loss of energy that occurs when regenerative energy generated by a motor is transferred from the feeding path 40 to the power supply 90.

When configured to control transfer of power from the feeding path 40 to the power supply 90, the feeding unit 50 functions as a power regeneration converter (power regeneration device) provided between the feeding path 40 and the power supply 90. In this case, the feeding unit 50 converts alternating-current power supplied from the power supply 90 into direct-current power and supplies the direct-current power to the feeding path 40 and the driving unit 30. Also, the feeding unit 50 converts direct-current power supplied from the driving unit 30 and the feeding path 40 into alternating-current power and supplies the alternating-current power to the power supply 90.

The feeding unit 50 may be configured to convert alternating-current power into direct-current power and vice versa and implemented as a circuit that includes a three-phase bridge circuit (power running and power regeneration unit) composed of six power transistors. When a motor is in the power running state, the feeding unit 50 rectifies an alternating current supplied from the power supply 90 into a direct current mainly by diodes connected in parallel to the power transistors constituting the three-phase bridge circuit.

Alternatively, the feeding unit 50 may include a power running path and a power regeneration path that are provided in parallel. For example, a diode bridge circuit for converting alternating-current power supplied from the power supply 90 into direct-current power may be inserted in the power running path, and a three-phase bridge circuit for converting direct-current power supplied from the feeding path 40 into alternating-current power may be inserted in the power regeneration path.

When configured to function as a power regeneration converter, the feeding unit 50 may include a three-phase bridge circuit that includes three bridge circuits each including the transistors 81 and 82 and the inductor 85 illustrated in FIG. 2, and the driving signal generating unit 86 illustrated in FIG. 2.

In this case, the driving signal generating unit 86 receives a detection result indicating the regenerating state of the mold-opening/closing motor 11 from the detecting unit 70, and outputs driving signals to turn on/off the transistors 81 and 82 so that power is supplied from the feeding path 40 to the power supply 90.

The control method described above with reference to FIGs. 3 through 7 may be applied to the feeding unit 50 when it is used as a power regeneration converter by substituting power $P_M$ in the control method with power output by the feeding unit 50 to the feeding path 40.

An aspect of this disclosure provides an injection molding apparatus that makes it possible to reduce the loss of energy resulting from transfer of power.

**Claims**

1.  An injection molding apparatus, comprising:

    a plurality of motors (11, 12, 13, 14) including a mold-opening/closing motor (11);
    a driving unit (30) configured to drive the motors (11, 12, 13, 14);
    a feeding path (40);
    a feeding unit (50) configured to supply power via the feeding path (40) to the driving unit (30); and
    an electric storage (60);
    **characterized in that** the injection molding apparatus further comprises:
    a power transfer unit (80) configured to limit transfer of power from the feeding path (40) to the electric storage (60) when power is regenerated by any one of the motors (12, 13, 14) other than the mold-opening/closing motor (11) compared to a case where power is regenerated by the mold-opening/closing motor (11).

2.  The injection molding apparatus as claimed in claim 1, wherein the power transfer unit (80) is further configured to transfer power from the electric storage (60) to the feeding path (40) when the mold-opening/closing motor (11) is in a power running state.

3.  The injection molding apparatus as claimed in claim 2, wherein the power transfer unit (80) is further configured to transfer power from the electric storage (60) to the feeding path (40) when any one of the motors (12, 13, 14) other than the mold-opening/closing motor (11) is in the power running state.

4.  The injection molding apparatus as claimed in claim 3, wherein the power transfer unit (80) is configured to limit transfer of power from the electric storage (60) to the feeding path (40) when any one of the motors (12, 13, 14) other than the mold-opening/closing motor (11) is in the power running state compared to a case where the mold-opening/closing motor (11) is in the power running state.

5.  The injection molding apparatus as claimed in claim 1, further comprising:

a detecting unit (70) configured to detect a driving state of the mold-opening/closing motor (11); and
wherein the power transfer unit (80) configured to control power transferred from the feeding path (40) to the electric storage (60) based on the detected driving state of the mold-opening/closing motor (11).

6. The injection molding apparatus as claimed in claim 5, wherein the power transfer unit (80) is further configured to control power transferred from the electric storage (60) to the feeding path (40) based on a power running state of the mold-opening/closing motor (11) detected by the detecting unit (70).

7. An injection molding apparatus, comprising:

a plurality of motors (11, 12, 13, 14) including a mold-opening/closing motor (11);
a driving unit (30) configured to drive the motors (11, 12, 13, 14);
a feeding path (40); and
a feeding unit (50) configured to supply power from a power supply (90) via the feeding path (40) to the driving unit (30),
**characterized in that**:
the feeding unit (50) is configured to limit transfer of power from the feeding path (40) to the power supply (90) when power is regenerated by any one of the motors (12, 13, 14) other than the mold-opening/closing motor (11) compared to a case where power is regenerated by the mold-opening/closing motor (11).

8. The injection molding apparatus as claimed in claim 7, further comprising:

a detecting unit (70) configured to detect a driving state of the mold-opening/closing motor (11); and
wherein the feeding unit (50) is further configured to control power transferred from the feeding path (40) to the power supply based on the detected driving state of the mold-opening/closing motor (11).

9. The injection molding apparatus as claimed in any one of claims 5, 6 or 8, wherein the detecting unit (70) is configured to detect the driving state of the mold-opening/closing motor (11) based on a power variation pattern at the feeding path (40).

10. The injection molding apparatus as claimed in claim 9, wherein the detecting unit (70) is configured to detect the power variation pattern by monitoring power variation periods.

11. The injection molding apparatus as claimed in claim 9 or 10, wherein the detecting unit (70) is configured to detect the driving state of the mold-opening/closing motor (11) by excluding influence of the motors (12, 13, 14) other than the mold-opening/closing motor (11) from the power variation pattern.

12. The injection molding apparatus as claimed in any one of claims 5, 6 or 8, further comprising:

a control unit (100) configured to control the driving state of the mold-opening/closing motor (11) via the driving unit (30),
wherein the detecting unit (70) is configured to detect the driving state of the mold-opening/closing motor (11) based on a signal received from the control unit (100).

13. The injection molding apparatus as claimed in any one of claims 1 through 6 and 9 through 12, wherein the power transfer unit (80) is configured to transfer power from the feeding path (40) to the electric storage (60) in a predetermined period after power is turned on.

**Patentansprüche**

1. Spritzgießvorrichtung, umfassend:

eine Vielzahl von Motoren (11, 12, 13, 14), einen Motor (11) zum Öffnen/Schließen der Form beinhaltend;
eine Ansteuerungseinheit (30), welche konfiguriert ist, die Motoren (11, 12, 13, 14) anzusteuern;
eine Zuführbahn (40);
eine Zuführeinheit (50), welche konfiguriert ist, über die Zuführbahn (40) Strom für die Ansteuerungseinheit (30) bereitzustellen; und

einen elektrischen Speicher (60);

**dadurch gekennzeichnet, dass** die Spritzgießvorrichtung weiter umfasst:

eine Stromübertragungseinheit (80), welche konfiguriert ist, die Stromübertragung von der Zuführbahn (40) an den elektrischen Speicher (60) zu beschränken, wenn Strom mittels eines der Motoren (12, 13, 14) regeneriert wird, welcher nicht der Motor (11) zum Öffnen/Schließen der Form ist, im Vergleich zu einem Fall, in dem Strom mittels des Motors (11) zum Öffnen/Schließen der Form regeneriert wird.

2. Spritzgießvorrichtung nach Anspruch 1, wobei die Stromübertragungseinheit (80) weiter konfiguriert ist, Strom von dem elektrischen Speicher (60) zu der Zuführbahn (40) zu übertragen, wenn der Motor (11) zum Öffnen/Schließen der Form sich in einem Strombetriebszustand befindet.

3. Spritzgießvorrichtung nach Anspruch 2, wobei die Stromübertragungseinheit (80) weiter konfiguriert ist, Strom von dem elektrischen Speicher (60) zu der Zuführbahn (40) zu übertragen, wenn einer von den Motoren (12, 13, 14), welcher nicht der Motor (11) zum Öffnen/Schließen der Form ist, sich in dem Strombetriebszustand befindet.

4. Spritzgießvorrichtung nach Anspruch 3, wobei die Stromübertragungseinheit (80) konfiguriert ist, eine Übertragung von Strom von dem elektrischen Speicher (60) zu der Zuführbahn (40) zu beschränken, wenn einer von den Motoren (12, 13, 14), welcher nicht der Motor (11) zum Öffnen/Schließen der Form ist, sich in dem Strombetriebszustand befindet, im Vergleich zu einem Fall, in dem sich der Motor (11) zum Öffnen/Schließen der Form in dem Strombetriebszustand befindet.

5. Spritzgießvorrichtung nach Anspruch 1, weiter umfassend:

eine Erkennungseinheit (70), welche konfiguriert ist, einen Ansteuerungszustand des Motors (11) zum Öffnen/Schließen der Form zu erkennen; und
wobei die Stromübertragungseinheit (80) konfiguriert ist, Strom, welcher von der Zuführbahn (40) an den elektrischen Speicher (60) übertragen wird, auf der Grundlage des erkannten Ansteuerungszustands des Motors (11) zum Öffnen/Schließen der Form zu steuern.

6. Spritzgießvorrichtung nach Anspruch 5, wobei die Stromübertragungseinheit (80) weiter konfiguriert ist, Strom, welcher von dem elektrischen Speicher (60) zu der Zuführbahn (40) übertragen wird, auf der Grundlage eines Strombetriebszustands des Motors (11) zum Öffnen/Schließen der Form, welcher von der Erkennungseinheit (70) erkannt wurde, zu steuern.

7. Spritzgießvorrichtung, umfassend:

eine Vielzahl von Motoren (11, 12, 13, 14), einen Motor (11) zum Öffnen/Schließen der Form beinhaltend;
eine Ansteuerungseinheit (30), welche konfiguriert ist, die Motoren (11, 12, 13, 14) anzusteuern;
eine Zuführbahn (40); und
eine Zuführeinheit (50), welche konfiguriert ist, Strom aus einer Stromversorgung (90) über die Zuführbahn (40) für die Ansteuerungseinheit (30) bereitzustellen,
**dadurch gekennzeichnet, dass**:
die Zuführeinheit (50) konfiguriert ist, die Stromübertragung von der Zuführbahn (40) an die Stromversorgung (90) zu beschränken, wenn Strom mittels eines der Motoren (12, 13, 14) regeneriert wird, welcher nicht der Motor (11) zum Öffnen/Schließen der Form ist, im Vergleich zu einem Fall, in dem Strom mittels des Motors (11) zum Öffnen/Schließen der Form regeneriert wird.

8. Spritzgießvorrichtung nach Anspruch 7, weiter umfassend:

eine Erkennungseinheit (70), welche konfiguriert ist, einen Ansteuerungszustand des Motors (11) zum Öffnen/Schließen der Form zu erkennen; und
wobei die Zuführeinheit (50) weiter konfiguriert ist, Strom, welcher von der Zuführbahn (40) an die Stromversorgung übertragen wird, auf der Grundlage des erkannten Ansteuerungszustands des Motors (11) zum Öffnen/Schließen der Form zu steuern.

9. Spritzgießvorrichtung nach einem der Ansprüche 5, 6, oder 8, wobei die Erkennungseinheit (70) konfiguriert ist, den Ansteuerungszustand des Motors (11) zum Öffnen/Schließen der Form auf der Grundlage eines Stromschwankungsmusters in der Zuführbahn (40) zu erkennen.

**10.** Spritzgießvorrichtung nach Anspruch 9, wobei die Erkennungseinheit (70) konfiguriert, das Stromschwankungsmuster mittels Überwachung der Stromschwankungszeiträume zu erkennen.

**11.** Spritzgießvorrichtung nach Anspruch 9 oder 10, wobei die Erkennungseinheit (70) konfiguriert ist, den Ansteuerungszustand des Motors (11) zum Öffnen/Schließen der Form durch Ausschließen des Einflusses der Motoren (12, 13, 14), welche nicht der Motor (11) zum Öffnen/Schließen der Form sind, von dem Stromschwankungsmuster zu erkennen.

**12.** Spritzgießvorrichtung nach einem der Ansprüche 5, 6 oder 8, weiter umfassend:

eine Steuereinheit (100), welche konfiguriert ist, den Ansteuerungszustand des Motors (11) zum Öffnen/Schließen der Form über die Ansteuerungseinheit (30) zu steuern,
wobei die Erkennungseinheit (70) konfiguriert ist, den Ansteuerungszustand des Motors (11) zum Öffnen/Schließen der Form auf der Grundlage eines von der Steuereinheit (100) empfangenen Signals zu erkennen.

**13.** Spritzgießvorrichtung nach einem der Ansprüche 1 bis 6, und 9 bis 12, wobei die Stromübertragungseinheit (80) konfiguriert ist, Strom von der Zuführbahn (40) in einem vorbestimmten Zeitraum nach Einschalten des Stroms an den elektrischen Speicher (60) zu übertragen.

## Revendications

**1.** Appareil de moulage par injection, comprenant :

une pluralité de moteurs (11, 12, 13, 14) incluant un moteur d'ouverture/de fermeture de moule (11) ;
une unité d'entraînement (30) configurée pour entraîner les moteurs (11, 12, 13, 14);
un trajet d'alimentation (40) ;
une unité d'alimentation (50) configurée pour fournir de l'énergie via le trajet d'alimentation (40) à l'unité d'entraînement (30) ; et
un stockage électrique (60) ;
**caractérisé en ce que** l'appareil de moulage par injection comprend en outre :
une unité de transfert d'énergie (80) est configurée pour limiter un transfert d'énergie depuis le trajet d'alimentation (40) vers le stockage électrique (60) lorsque l'énergie est régénérée par l'un quelconque des moteurs (12, 13, 14) autre que le moteur d'ouverture/de fermeture de moule (11) comparée à un boîtier où l'énergie est régénérée par le moteur d'ouverture/de fermeture de moule (11).

**2.** Appareil de moulage par injection selon la revendication 1, dans lequel l'unité de transfert d'énergie (80) est en outre configurée pour transférer de l'énergie depuis le stockage électrique (60) vers le trajet d'alimentation (40) lorsque le moteur d'ouverture/de fermeture de moule (11) est dans un état de fonctionnement d'énergie.

**3.** Appareil de moulage par injection selon la revendication 2, dans lequel l'unité de transfert d'énergie (80) est en outre configurée pour transférer de l'énergie depuis le stockage électrique (60) vers le trajet d'alimentation (40) lorsque l'un quelconque des moteurs (12, 13, 14) autre que le moteur d'ouverture/de fermeture de moule (11) est dans l'état de fonctionnement d'énergie.

**4.** Appareil de moulage par injection selon la revendication 3, dans lequel l'unité de transfert d'énergie (80) est configurée pour limiter un transfert d'énergie depuis le stockage électrique (60) vers le trajet d'alimentation (40) lorsque l'un quelconque des moteurs (12, 13, 14) autre que le moteur d'ouverture/de fermeture de moule (11) est dans l'état de fonctionnement d'énergie comparée à un boîtier où le moteur d'ouverture/de fermeture de moule (11) est dans l'état de fonctionnement d'énergie.

**5.** Appareil de moulage par injection selon la revendication 1, comprenant en outre :

une unité de détection (70) configurée pour détecter un état d'entraînement du moteur d'ouverture/de fermeture de moule (11) ; et
dans lequel l'unité de transfert d'énergie (80) est configurée pour commander l'énergie transférée depuis le trajet d'alimentation (40) vers le stockage électrique (60) sur la base de l'état d'entraînement détecté du moteur d'ouverture/de fermeture de moule (11).

**6.** Appareil de moulage par injection selon la revendication 5, dans lequel l'unité de transfert d'énergie (80) est en outre configurée pour commander l'énergie transférée depuis le stockage électrique (60) vers le trajet d'alimentation (40) sur la base d'un état de fonctionnement d'énergie du moteur d'ouverture/de fermeture de moule (11) détecté par l'unité de détection (70).

**7.** Appareil de moulage par injection, comprenant :

une pluralité de moteurs (11, 12, 13, 14) incluant un moteur d'ouverture/de fermeture de moule (11) ;
une unité d'entraînement (30) configurée pour entraîner les moteurs (11, 12, 13, 14) ;
un trajet d'alimentation (40) ; et
une unité d'alimentation (50) configurée pour fournir de l'énergie depuis un approvisionnement d'énergie (90) via le trajet d'alimentation (40) à l'unité d'entraînement (30),
**caractérisé en ce que** :
l'unité d'alimentation (50) est configurée pour limiter un transfert d'énergie depuis le trajet d'alimentation (40) vers l'approvisionnement d'énergie (90) lorsque l'énergie est régénérée par l'un quelconque des moteurs (12, 13, 14) autre que le moteur d'ouverture/de fermeture de moule (11) comparée à un boîtier où l'énergie est régénérée par le moteur d'ouverture/de fermeture de moule (11).

**8.** Appareil de moulage par injection selon la revendication 7, comprenant en outre :

une unité de détection (70) configurée pour détecter un état d'entraînement du moteur d'ouverture/de fermeture de moule (11) ; et
dans lequel l'unité d'alimentation (50) est en outre configurée pour commander l'énergie transférée depuis le trajet d'alimentation (40) vers l'approvisionnement d'énergie sur la base de l'état d'entraînement détecté du moteur d'ouverture/de fermeture de moule (11).

**9.** Appareil de moulage par injection selon l'une quelconque des revendications 5, 6 ou 8, dans lequel l'unité de détection (70) est configurée pour détecter l'état d'entraînement du moteur d'ouverture/de fermeture de moule (11) sur la base d'un modèle de variation d'énergie au niveau du trajet d'alimentation (40).

**10.** Appareil de moulage par injection selon la revendication 9, dans lequel l'unité de détection (70) est configurée pour détecter le modèle de variation d'énergie en surveillant des périodes de variation d'énergie.

**11.** Appareil de moulage par injection selon la revendication 9 ou 10, dans lequel l'unité de détection (70) est configurée pour détecter l'état d'entraînement du moteur d'ouverture/de fermeture de moule (11) en excluant l'influence des moteurs (12, 13, 14) autre que le moteur d'ouverture/de fermeture de moule (11) depuis le modèle de variation d'énergie.

**12.** Appareil de moulage par injection selon l'une quelconque des revendications 5, 6 ou 8, comprenant en outre :

une unité de commande (100) configurée pour commander l'état d'entraînement du moteur d'ouverture/de fermeture de moule (11) via l'unité d'entraînement (30),
dans lequel l'unité de détection (70) est configurée pour détecter l'état d'entraînement du moteur d'ouverture/de fermeture de moule (11) sur la base d'un signal reçu de l'unité de commande (100).

**13.** Appareil de moulage par injection selon l'une quelconque des revendications 1 à 6 et 9 à 12, dans lequel l'unité de transfert d'énergie (80) est configurée pour transférer de l'énergie depuis le trajet d'alimentation (40) vers le stockage électrique (60) dans une période prédéterminée après que l'énergie est allumée.

FIG.1

EP 2 610 044 B1

FIG.2

EP 2 610 044 B1

## FIG.3

# FIG.4

# FIG.5

FIG.6

EP 2 610 044 B1

## FIG.7

POWER

TIME [ms]

P_L

P_M

**REFERENCES CITED IN THE DESCRIPTION**

**Patent documents cited in the description**

- US 6333611 B1